# FASCICULE DE BREVET EUROPEEN

(11) **EP 0 570 316 B1**
(45) Date de publication et mention de la délivrance du brevet: **17.12.1997**
(21) Numéro de dépôt: 93440041.7
(22) Date de dépôt: 14.05.1993
(51) Int. Cl.: A01B 71/06, A01B 73/06, A01D 34/66

(54) **Machine agricole, notamment faucheuse, avec un dispositif de transmission de mouvement perfectionné**
Landwirtschaftliche Maschine, insbesondere Mähmaschine, mit einer verbesserten Vorrichtung zur Übertragung des Antriebs
Agricultural implement, especially mower, with an improved power transmission device

(30) Priorité: 14.05.1992 FR 9206019
(43) Date de publication de la demande: 18.11.1993
(73) Titulaire: KUHN S.A., F-67700 Saverne (FR)
(72) Inventeur: Walch, Martin, F-67490 Dettwiller (FR); Wattron, Bernard, F-67700 Haegen (FR)

(56) Documents cités:
- EP-A- 0 077 859
- EP-A- 0 124 462
- EP-A- 0 486 414
- BR-A- 7 704 325
- FR-A- 1 593 947
- FR-A- 2 095 026
- FR-A- 2 608 358
- GB-A- 828 029
- NL-A- 8 005 590
- NL-A- 8 005 590
- US-A- 2 125 645

## Description

La présente invention concerne une machine agricole comportant une structure d'attelage destinée à être liée à l'attelage à trois points d'un véhicule moteur, et un corps lié à ladite structure d'attelage à l'aide d'une articulation cylindrique d'axe géométrique dirigé vers le haut, de sorte à pouvoir occuper deux positions distinctes par pivotement autour dudit axe géométrique, dont l'une est une position de travail dans laquelle le corps s'étend transversalement à la direction de travail, ledit corps comportant au moins un organe de travail animé au moyen d'un dispositif de transmission de mouvement à engrenages qui comprend :
- un premier carter solidaire de la structure d'attelage et comportant un arbre d'entrée, et
- un deuxième carter solidaire du corps, monté pivotant par rapport au premier carter autour de l'axe géométrique de ladite articulation cylindrique et comportant un arbre de sortie,
ledit corps pourvu du deuxième carter étant susceptible d'être pivoté par rapport à la structure d'attelage pourvue du premier carter, de l'une au moins desdites positions dans l'autre position.

Une telle machine est connue par le document FR-A-1 593 947.

Dans ce document, il est connu une faucheuse comportant une structure d'attelage et un groupe de fauche. La structure d'attelage est destinée à être liée, à sa partie frontale, à l'attelage à trois points d'un tracteur et le groupe de fauche est constitué d'une poutre supportant plusieurs tambours qui tournent chacun autour d'un axe vertical. A l'une de ses extrémités longitudinales, la poutre est liée à la structure d'attelage au moyen d'une articulation cylindrique d'axe vertical qui autorise un pivotement du groupe de fauche d'environ 180° par rapport à la structure d'attelage. Le groupe de fauche peut ainsi être pivoté manuellement d'une première position de travail qui est à droite du tracteur et dans laquelle son axe longitudinal s'étend perpendiculairement à la direction de travail, jusque dans une deuxième position de travail qui est à gauche du tracteur et dans laquelle son axe longitudinal s'étend également perpendiculairement à la direction de travail, ainsi que dans plusieurs positions intermédiaires. A son autre extrémité longitudinale, la poutre est munie d'un support par l'intermédiaire duquel le groupe de fauche s'appuie sur le sol durant le travail.

L'entraînement en rotation des tambours du groupe de fauche s'effectue à partir de la prise de force du tracteur qui entraîne, par l'intermédiaire d'un arbre à joints universels, l'arbre d'entrée d'un carter lié à la structure d'attelage. Cet arbre d'entrée s'étend dans la direction d'avance du tracteur et transmet le mouvement de rotation, par l'intermédiaire d'un premier couple d'engrenages coniques, à un arbre intermédiaire. Ce dernier a son axe de rotation qui est confondu avec l'axe vertical de l'articulation cylindrique liant le groupe de fauche à la structure d'attelage, et transmet le mouvement de rotation, par l'intermédiaire d'un deuxième couple d'engrenages coniques, à un arbre de transmission s'étendant à l'intérieur de la poutre du groupe de fauche et entraînant les tambours par l'intermédiaire d'un couple d'engrenages coniques associé à chaque tambour.

Grâce à un tel dispositif de transmission de mouvement, le groupe de fauche peut être animé dans toutes les positions dans lesquelles il peut être manuellement pivoté autour de l'axe vertical de l'articulation cylindrique le liant à la structure d'attelage.

L'avantage de ce dispositif de transmission de mouvement à engrenages est double dans la mesure où, non seulement il permet l'animation du groupe de fauche dans toutes ses positions, ce qui est très pratique et évite les fausses manoeuvres, mais c'est également une transmission à engrenages autorisant une transmission de puissance importante avec un bon rendement et un encombrement réduit.

La demande de brevet européen antérieure **EP 0 486 414 A1** qui constitue un état de la technique au sens des Articles 54(3) et 54(4)CBE, concerne une machine agricole comportant une structure d'attelage destinée à être liée à l'attelage à trois points d'un véhicule moteur, et un corps lié à ladite structure d'attelage à l'aide d'une articulation cylindrique d'axe géométrique dirigé vers le haut. De cette sorte, le corps peut occuper deux positions distinctes par pivotement autour dudit axe géométrique, l'une desdites positions étant une position de travail dans laquelle le corps s'étend transversalement à la direction de travail.

Le corps comporte au moins un organe de travail animé au moyen d'un dispositif de transmission de mouvement à engrenages qui comprend :
- un premier carter qui est lié rigidement à la structure d'attelage et qui comporte un arbre d'entrée,
   et
- un deuxième carter qui est destiné à pivoter avec le corps, ce deuxième carter étant, à cet effet, monté pivotant par rapport au premier carter autour de l'axe géométrique de ladite articulation cylindrique et comportant un arbre de sortie s'étendant en direction du corps.

Dans cette machine agricole antérieure, le corps et le deuxième carter sont susceptibles d'être pivotés par rapport à la structure d'attelage pourvue du premier carter, de l'une desdites positions dans l'autre position au moyen d'éléments de manoeuvre commandés depuis le véhicule moteur.

Ces éléments de manoeuvre comportent un vérin hydraulique à double tige laquelle est liée, à ses extrémités s'étendant au-dehors du cylindre dudit vérin, à la structure d'attelage. Le cylindre du vérin, quant à lui, est en liaison d'entraînement avec le corps. Celle-ci est réalisée au moyen d'une crémaillère fixée audit cylindre et engrenant avec un secteur circulaire denté solidaire en rotation avec le corps et centré sur l'axe géométrique de l'articulation cylindrique. Enfin, un organe d'orientation fixé sur le secteur circulaire denté pilote la rotation du deuxième carter pour que l'arbre de sortie de celui-ci s'étende toujours en direction du corps.

Il apparaît sur les différentes figures de ladite demande de brevet européen antérieure que les éléments de manoeuvre s'étendent sans protection entre la structure d'attelage et le corps. Il existe de ce fait des zones de coincement qui risquent de causer des blessures à l'utilisateur ou à des tierces personnes. En outre, ni la crémaillère, ni le secteur circulaire denté ne sont protégés des résidus végétaux. Leur fonctionnement peut donc devenir aléatoire et ils ne sont pas à l'abri de la corrosion.

L'invention a pour but, tout en conservant le double avantage du dispositif de transmission de mouvement à engrenages comprenant deux carters susceptibles de pivoter l'un par rapport à l'autre, de perfectionner une telle machine agricole de sorte que le pivotement de son corps par rapport à sa structure d'attelage puisse être réalisé en toute sécurité et de manière fiable à partir du véhicule moteur auquel est destinée à être liée la machine.

A cet effet, la machine agricole selon l'invention est caractérisée en ce que le pivotement du corps pourvu du deuxième carter par rapport à la structure d'attelage pourvue du premier carter est réalisé au moyen d'éléments de manoeuvre agencés pour être commandés depuis le véhicule moteur et comprenant :
- un premier élément de manoeuvre mobile porté par la structure d'attelage, et
- un deuxième élément de manoeuvre mobile porté par le corps, ces éléments de manoeuvre mobiles étant en liaison d'entraînement l'un avec l'autre et étant implantés à l'intérieur d'un ensemble formé au moins par le premier carter et le deuxième carter.

L'utilisateur peut ainsi pivoter le corps par rapport à la structure d'attelage depuis la cabine du véhicule moteur.

Comme les éléments de manoeuvre mobiles sont implantés à l'intérieur d'un ensemble formé par au moins le premier carter et le deuxième carter, tout risque de blessure est supprimé.

En outre, un tel agencement protège également les éléments de manoeuvre mobiles des résidus végétaux et de la corrosion.

Enfin, l'implantation des éléments de manoeuvre mobiles à l'intérieur de l'ensemble formé par au moins le premier carter et le deuxième carter améliore substantiellement le "design" de cette partie de la machine agricole.

Il pourra en outre être prévu que les éléments de manoeuvre soient implantés plus haut que l'arbre d'entrée du premier carter. Un tel agencement sera notamment intéressant pour les faucheuses avec lesquelles les roues du véhicule moteur roulent, durant le travail, de part et d'autre d'un andain de produit coupé.

Une réalisation compacte pourra être obtenue lorsque les éléments de manoeuvre seront implantés entre l'arbre d'entrée du premier carter et l'arbre de sortie du deuxième carter.

Il pourra également être avantageusement prévu :
- que le premier élément de manoeuvre mobile soit constitué par le piston d'un vérin de manoeuvre et par une crémaillère actionnée par ledit piston, et
- que le deuxième élément de manoeuvre mobile soit constitué par un secteur denté centré sur l'axe géométrique de l'articulation cylindrique et engrenant avec la crémaillère.

Ledit vérin de manoeuvre pourra même comporter deux cylindres s'étendant dans le prolongement l'un de l'autre et fixés à la structure d'attelage, et deux pistons montés chacun de manière coulissante dans le cylindre correspondant. La crémaillère sera alors implantée entre ces deux pistons. Le secteur denté, quant à lui, pourra être lié au deuxième carter.

Avantageusement, le vérin de manoeuvre sera du type hydraulique.

Par ailleurs, une liaison particulièrement bonne pourra être obtenue entre le deuxième carter et la structure d'attelage au moyen de deux paliers formant l'articulation cylindrique et implantés respectivement à la partie supérieure et à la partie inférieure dudit deuxième carter. Dans ce type de réalisation, il sera alors prévu que la structure d'attelage comporte au moins deux parties liées rigidement entre elles et comportant chacune l'un desdits paliers.

Avantageusement, l'une desdites parties pourra d'ailleurs être constituée par le premier carter lui-même.

Dans une réalisation particulière, il pourra être prévu que la structure d'attelage comporte trois parties, à savoir :
- un cadre trois points destiné à être lié aux trois points d'attelage du véhicule moteur,
- le premier carter comprenant l'un desdits paliers et étant lié rigidement à ce cadre trois points
   et
- un bras comportant l'autre palier et fixé au premier carter ou audit cadre trois points.

Afin de pouvoir assembler rapidement et facilement la structure d'attelage, il pourra en sus, être prévu :
- que le cadre trois points comporte à sa partie inférieure un support qui s'étend au moins sensiblement sous le premier carter et auquel sera fixé ledit premier carter au moyen d'un organe de fixation,
- que le premier carter soit également fixé à la partie supérieure du cadre trois points au moyen d'un autre organe de fixation,
- que le deuxième carter soit implanté au-dessus du premier carter,
   et
- que le bras soit fixé au premier carter au moyen d'éléments de fixation.

Préférentiellement, ces organes de fixation et ces éléments de fixation comporteront des vis.

Il pourra aussi être prévu que l'autre position du corps soit une position de transport dans laquelle le corps s'étendra au moins sensiblement suivant la direction de transport.

Dans les deux positions du corps, ainsi que durant tout le pivotement du corps par rapport à la structure d'attelage autour de l'axe géométrique de l'articulation cylindrique sous l'action des éléments de manoeuvre, le corps pourra avantageusement continuellement s'appuyer sur le sol au moyen d'une roue. De cette manière, le passage de l'une des positions dans l'autre position sera très simple et très rapide. De plus, comme la machine agricole s'appuie sur le sol dans toutes les positions au moyen d'une roue, le véhicule moteur sera très stable.

Dans le voisinage de l'articulation cylindrique, le corps pourra encore comporter une liaison pivot d'axe géométrique au moins sensiblement perpendiculaire au corps et à l'axe géométrique de ladite articulation cylindrique, tandis qu'un arbre télescopique à joints universels transmettra le mouvement de rotation de l'arbre de sortie du deuxième carter à un arbre d'entrée d'un carter d'entrée lié au reste du corps. Dans ce cas, le corps sera susceptible de pivoter autour de l'axe géométrique de ladite liaison pivot pour s'adapter aisément au relief du sol. De plus, l'arbre télescopique à joints universels assurera la continuité de l'entraînement dans toutes les positions d'adaptation du corps au relief du sol.

Il pourra également être avantageusement prévu que les engrenages du dispositif de transmission de mouvement soient lubrifiés à l'aide d'une circulation forcée de lubrifiant de l'un des carters dans l'autre carter. Les divers engrenages et éléments mobiles desdits carters seront ainsi parfaitement lubrifiés, alors qu'une faible quantité de lubrifiant suffira à cet effet.

Le lubrifiant pourra être avantageusement amené du carter inférieur dans le carter supérieur au travers d'un conduit, tandis qu'une ouverture prévue entre lesdits carters permettra au lubrifiant de s'écouler du carter supérieur dans le carter inférieur. Dès lors, il ne sera plus nécessaire d'assurer l'étanchéité entre lesdits carters de la machine agricole selon l'invention tout en assurant une lubrification correcte du carter supérieur. De ce fait, la réalisation sera plus simple. Il sera aussi possible de vidanger les deux carters en n'ouvrant qu'un seul bouchon implanté au fond du carter inférieur. De même, pour remettre du lubrifiant, il suffira de le verser indifféremment dans l'un ou l'autre des deux carters. La vérification du niveau de lubrifiant enfin sera également simplifiée puisqu'il suffira de faire le contrôle dans le seul carter inférieur.

La transmission du mouvement de rotation de l'arbre d'entrée à l'arbre de sortie du dispositif de transmission de mouvement à engrenages sera avantageusement réalisée par l'intermédiaire d'un premier couple de roue dentées coniques logé dans le premier carter, un arbre intermédiaire dont l'axe de rotation sera au moins sensiblement confondu avec l'axe géométrique de l'articulation cylindrique, et un deuxième couple de roues dentées coniques logé dans le deuxième carter.

Dans cette réalisation, il pourra alors être avantageusement prévu que l'arbre intermédiaire comporte le conduit par l'intermédiaire duquel le lubrifiant doit être amené dans le carter supérieur sous l'effet de la rotation dudit arbre intermédiaire.

Une solution intéressante consiste à centrer le conduit sur l'axe de rotation de l'arbre intermédiaire. Lorsque la forme du conduit ne permet pas, à elle seule, d'amener le lubrifiant dans le carter supérieur, on pourra munir ledit conduit, au moins sensiblement à son extrémité inférieure, d'une forme hélicoïdale baignant dans le lubrifiant, respectivement faire collaborer ledit conduit, au moins sensiblement à son extrémité inférieure, avec une forme hélicoïdale baignant dans le lubrifiant.

Cette forme hélicoïdale pourra, dans ce dernier cas, être avantageusement réalisée par une vis à gros pas fixée au carter inférieur.

Toutes ces solutions permettront d'amener, par un effet de pompage, le lubrifiant du carter inférieur dans le carter supérieur.

En sus, il pourra encore être prévu que le dispositif de transmission de mouvement comporte un dispositif à roue libre.

Un agencement intéressant sera d'ailleurs obtenu lorsque le dispositif à roue libre sera directement implanté entre la roue dentée conique de l'arbre d'entrée du premier carter et l'arbre d'entrée lui-même.

L'invention s'applique tout particulièrement aux machines de coupe et plus spécialement aux faucheuses avec ou sans organes de traitement du produit coupé.

D'autres caractéristiques de l'invention apparaissent dans la description suivante d'un exemple non limitatif de réalisation de l'invention faite en référence au dessin annexé sur lequel :
- la figure 1 représente une vue de dessus d'une machine agricole selon l'invention liée à un tracteur agricole et placée dans la position de travail ;
- la figure 2 représente, dans la position de travail de la figure 1, une coupe de l'organe de manoeuvre montrant la crémaillère qui engrène avec le secteur denté ;
- la figure 3 représente, dans la position de transport, une coupe partielle de la structure d'attelage et d'une partie du corps ;
- la figure 4 représente une vue de dessus de la machine agricole placée dans la position de transport ;
- la figure 5 représente une vue partielle, suivant la flèche V définie sur la figure 1, de la machine agricole sans organes de protection,
- la figure 6 représente une vue partielle, suivant la flèche VI définie sur la figure 1, de la machine agricole sans organes de protection ;
- la figure 7 représente, en coupe, un organe de délestage et de levage dans la position de travail ; et
- la figure 8 représente, en coupe, l'organe de délestage et de levage de la figure 7 dans la position de transport.

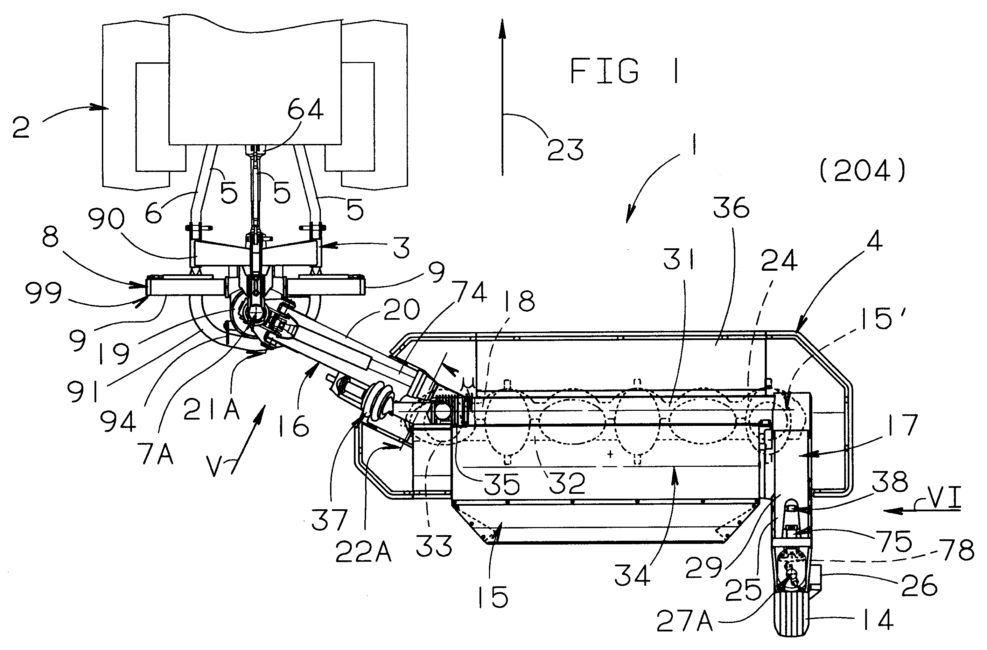

Les figures 1 à 8 représentent une faucheuse (1) selon l'invention. Celle-ci est attelée à un tracteur agricole (2).

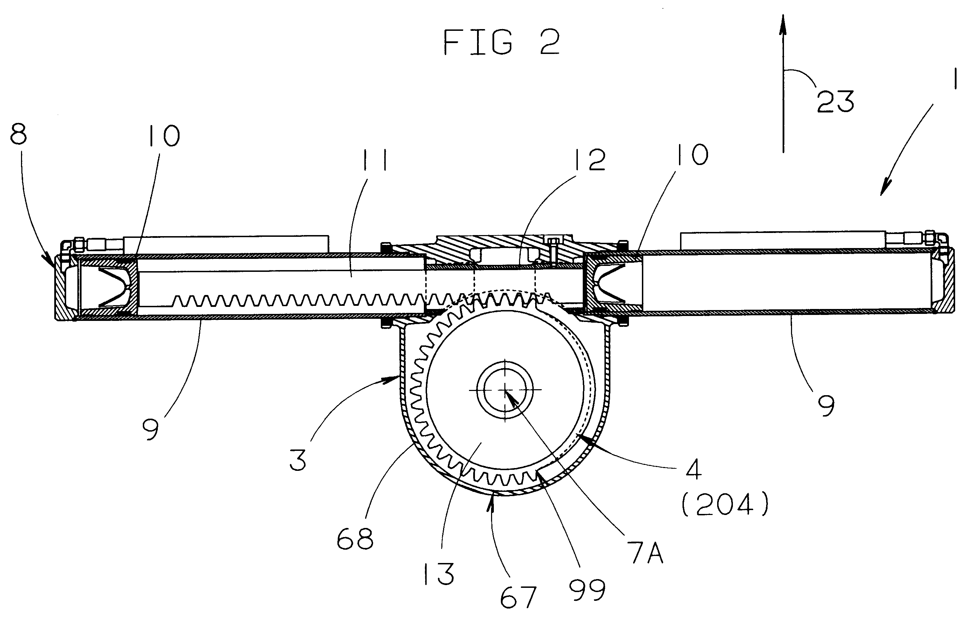

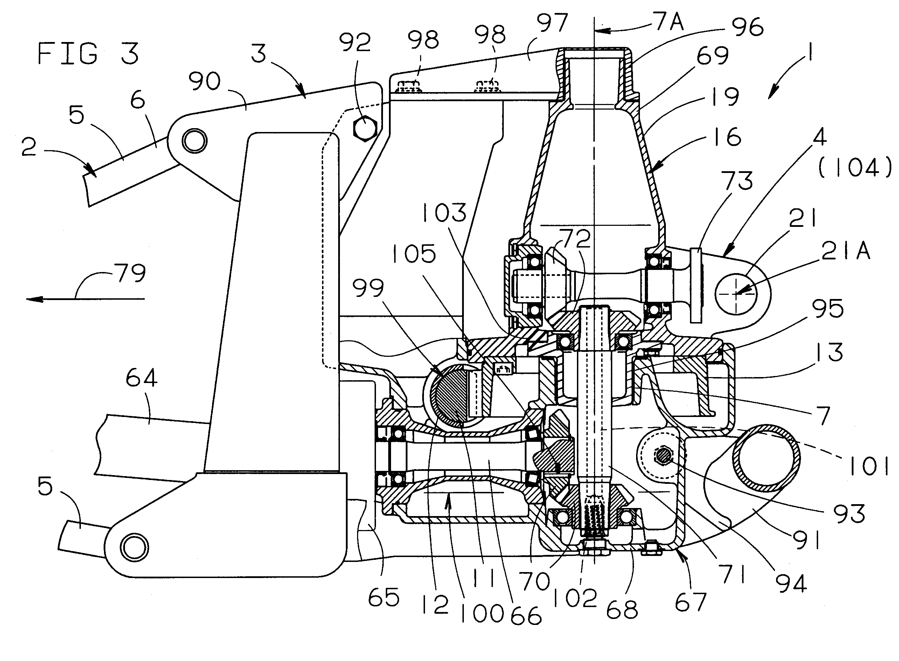

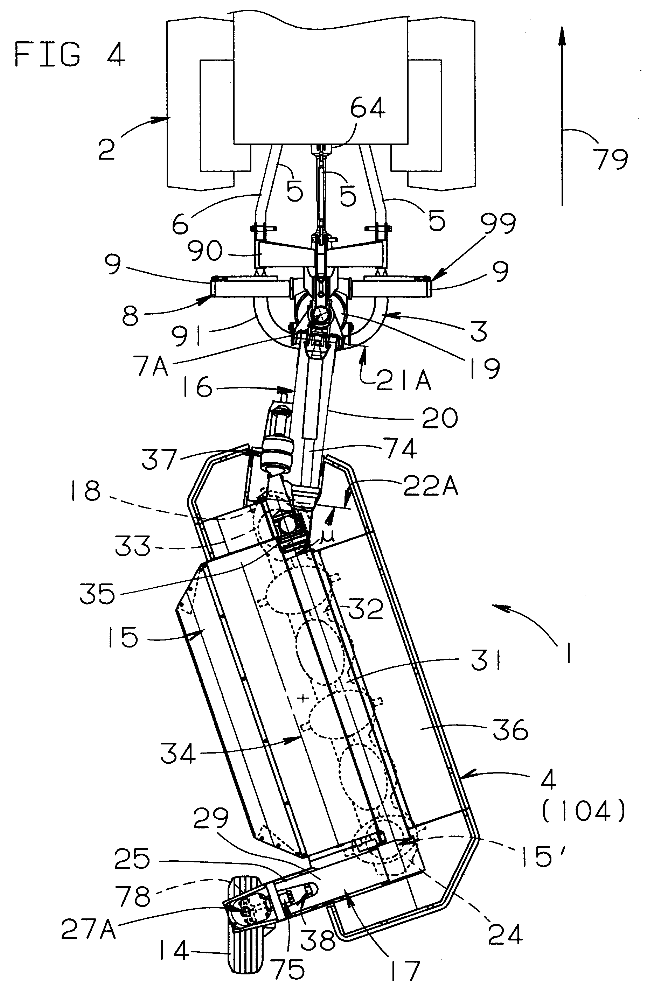

La faucheuse (1) se compose principalement d'une structure d'attelage (3) et d'un corps (4). La structure d'attelage (3) est destinée à être liée, à sa partie frontale, aux trois points (5) du dispositif de relevage (6) du tracteur (2). Le corps (4) est lié à la structure d'attelage (3) au moyen d'une articulation cylindrique (7) (figure 3) d'axe géométrique (7A) au moins sensiblement vertical. La position angulaire du corps (4) par rapport à la structure d'attelage (3) peut être modifiée en faisant pivoter le corps (4) autour dudit axe géométrique (7A). La mise dans la position angulaire souhaitée est réalisée sous l'action d'un seul vérin de manoeuvre (8) comprenant deux cylindres (9) fixés à la structure d'attelage (3). Les deux cylindres (9) sont au moins sensiblement identiques et s'étendent horizontalement dans le prolongement l'un de l'autre. A l'intérieur de chaque cylindre (9) du vérin de manoeuvre (8) est prévu un piston (10) (figure 2) monté de manière coulissante dans ledit cylindre (9). Entre les deux pistons (10) est implantée une crémaillère (11) guidée au moyen d'une pièce de guidage (12) placée au dos de ladite crémaillère (11). De cette sorte, la crémaillère (11) peut uniquement être translatée dans les cylindres (9) sous l'action de l'huile qui alimente soit l'une soit l'autre des extrémités longitudinales du vérin de manoeuvre (8), afin d'engrener avec un secteur denté (13) qui est centré sur l'axe géométrique (7A) et solidaire du corps (4) de la faucheuse (1) (figure 3). Grâce à cet agencement, le corps (4) peut être pivoté autour dudit axe géométrique (7A) sous l'action du vérin de manoeuvre (8) pour être amené de sa position de transport (104) où il s'étend au moins sensiblement dans la voie du tracteur (2) (figures 3 et 4), dans une position de travail (204) où il s'étend au moins sensiblement à côté de la voie du tracteur (2) (figures 1 et 2). Lorsque le corps (4) est dans sa position de travail (204), on empêche l'huile de s'écouler du vérin de manoeuvre (8) ce qui a pour effet de condamner le pivotement dudit corps (4) autour de l'axe géométrique (7A). A l'inverse, pour le transport, on met en communication les deux chambres extérieures du vérin de manoeuvre (8) afin d'autoriser un libre pivotement du corps (4) autour de l'axe géométrique (7A). De ce fait, les manoeuvres de la faucheuse (1) durant le transport sont considérablement simplifiées.

Le corps (4) de la faucheuse (1) s'appuie sur le sol au moyen d'une seule roue (14) implantée à l'extrémité longitudinale du corps (4) éloignée de la structure d'attelage (3). Le corps (4) comporte principalement un mécanisme de récolte (15) et deux dispositifs de liaison (16, 17).

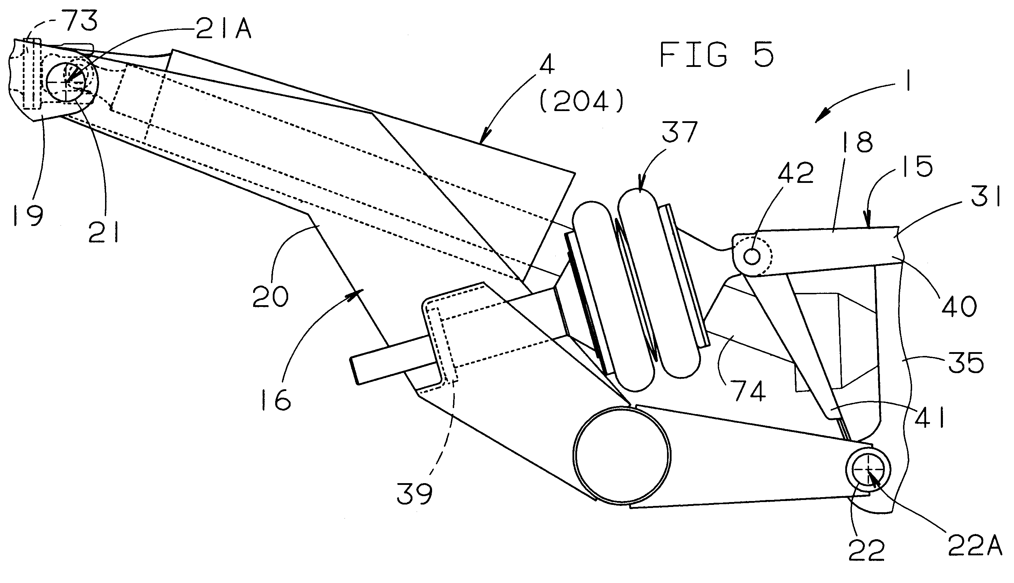

Le premier dispositif de liaison (16) qui est représenté en détail sur les figures 3 et 5, lie la première extrémité longitudinale (18) du mécanisme de récolte (15) à la structure d'attelage (3). A cet effet, le premier dispositif de liaison (16) se compose d'une tête d'attelage (19) montée pivotante autour de l'axe géométrique (7A) de la structure d'attelage (3) et d'un bras oscillant (20) liant le mécanisme de récolte (15) à ladite tête d'attelage (19). Grâce à ce bras oscillant (20), la première extrémité longitudinale (18) du mécanisme de récolte (15) peut se déplacer en hauteur de manière importante par rapport à la structure d'attelage (3) afin de s'adapter au relief du terrain. Ce bras oscillant (20) est plus précisément lié à l'une de ses extrémités à la tête d'attelage (19) au moyen d'une première liaison pivot (21). L'axe géométrique (21A) de cette première liaison pivot (21) s'étend au moins sensiblement orthogonalement à l'axe longitudinal du bras oscillant (20) et à l'axe géométrique (7A). A son autre extrémité, le bras oscillant (20) est lié au mécanisme de récolte (15) au moyen d'une deuxième liaison pivot (22) d'axe géométrique (22A) au moins sensiblement parallèle à l'axe géométrique (21A) de la première liaison pivot (21). Du reste, l'axe géométrique (22A) de la deuxième liaison pivot (22) s'étend, en vue suivant la direction de travail (23), au moins sensiblement à mi-hauteur du mécanisme de récolte (15) et forme, en vue de dessus, un angle (µ) d'environ 60° avec l'axe longitudinal (15') dudit mécanisme de récolte (15).

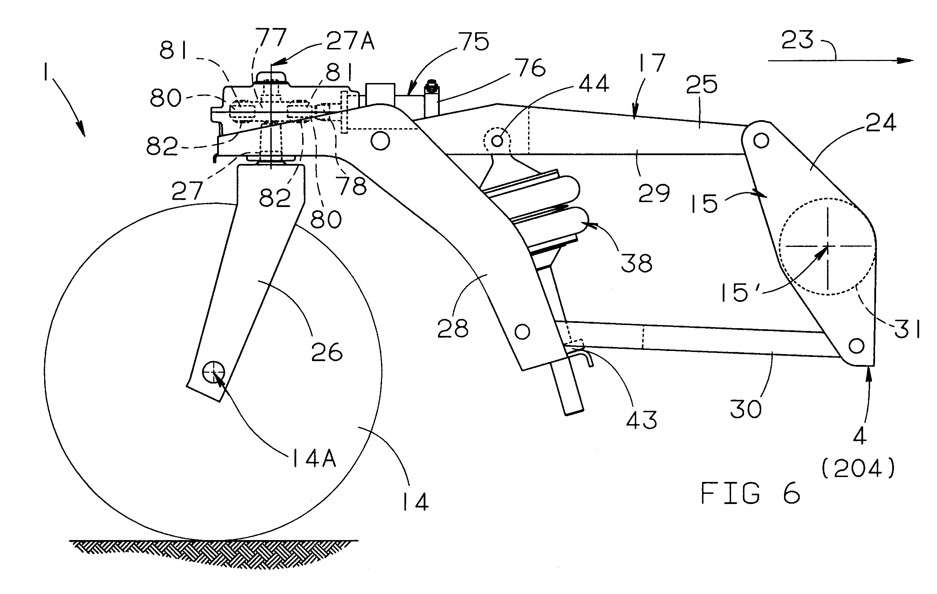

Le deuxième dispositif de liaison (17) (figure 6) lie la deuxième extrémité longitudinale (24) du mécanisme de récolte (15) à la roue (14). Ce deuxième dispositif de liaison (17) se compose d'un quadrilatère déformable (25) et d'un organe de guidage (26) de la roue (14). Le quadrilatère déformable (25) s'étend, en vue de dessus, au moins sensiblement orthogonalement à l'axe longitudinal (15') du mécanisme de récolte (15) et l'organe de guidage (26) de la roue (14) est lié au quadrilatère déformable (25) au moyen d'une articulation cylindrique (27) d'axe géométrique (27A) au moins sensiblement vertical. Grâce à cet agencement, la deuxième extrémité longitudinale (24) du mécanisme de récolte (15) peut aisément se déplacer en hauteur par rapport à la roue (14) afin de s'adapter au relief du terrain tout en autorisant le pivotement de l'organe de guidage (26) de la roue (14). Le quadrilatère déformable (25) comporte une console (28) à la partie supérieure de laquelle est articulé l'organe de guidage (26) de la roue (14) et qui est lié au mécanisme de récolte (15) au moyen de deux bielles (29, 30). Ce quadrilatère déformable (25) a au moins sensiblement la forme d'un parallélogramme dont le côté matérialisé par la console (28) s'étend vers le haut et vers l'arrière par rapport à la direction de travail (23) de sorte à ménager un espace pour la roue (14). Avantageusement, le prolongement de l'axe géométrique (27A) passe à proximité de l'axe de roulement (14A) de la roue (14).

Entre les deux dispositifs de liaison (16, 17) s'étend le mécanisme de récolte (15). Ce mécanisme de récolte (15) comporte une structure porteuse (31) à laquelle sont liés les deux dispositifs de liaison (16, 17). Cette structure porteuse (31) supporte une barre de coupe (32) équipée d'organes de coupe (33), et un rotor de traitement (34) - dont seul l'axe de rotation est représenté sur les figures 1 et 4 - destiné à traiter le produit coupé par lesdits organes de coupe (33). La structure porteuse (31) s'étend au moins sensiblement perpendiculairement à la direction de travail (23) et comporte un carter d'entrée (35) servant à l'entraînement des organes de coupe (33) et du rotor de traitement (34). Le carter d'entrée (35) est implanté dans le voisinage de la deuxième liaison pivot (22) liant le premier dispositif de liaison (16) au mécanisme de récolte (15). Du reste, le mécanisme de récolte (15) comporte aussi des organes de protection (36) qui s'étendent autour de la barre de coupe (32) et du rotor de traitement (34).

Le délestage et le levage du mécanisme de récolte (15) est réalisé au moyen de deux organes de délestage et de levage (37, 38) chacun associé au dispositif de liaison (16, 17) correspondant. Le premier organe de délestage et de levage (37) est implanté entre le bras oscillant (20) du premier dispositif de liaison (16) et la structure porteuse (31) du mécanisme de récolte (15). Comme visible sur la figure 5, le premier organe de délestage et de levage (37) est lié d'une part au moins sensiblement au milieu du bras oscillant (20) à l'aide d'une articulation élastique (39) et d'autre part au carter d'entrée (35) de la structure porteuse (31) au moyen de deux bras (40, 41). Ces deux bras (40, 41) forment avec le carter d'entrée (35) une triangulation très rigide à laquelle est lié le premier dispositif de délestage et de levage (37) à l'aide d'une bague élastique (42) du type "silentbloc". Grâce à l'articulation élastique (39) et à la bague élastique (42), l'organe de délestage et de levage (37) est d'un montage aisé et d'un fonctionnement silencieux. De surcroît, les vibrations sont amorties.

Le deuxième organe de délestage et de levage (38) (figure 6) s'étend entre la partie inférieure de la console (28) et la bielle supérieure (29) du quadrilatère déformable (25). Là aussi, l'organe de délestage et de levage (38) est lié au quadrilatère déformable (25) au moyen d'une articulation élastique (43) et d'une bague élastique (44). Compte tenu de leur agencement, les deux organes de délestage et de levage (37, 38) assurent, lors du travail, le délestage des extrémités longitudinales (18, 24) du mécanisme de récolte (15).

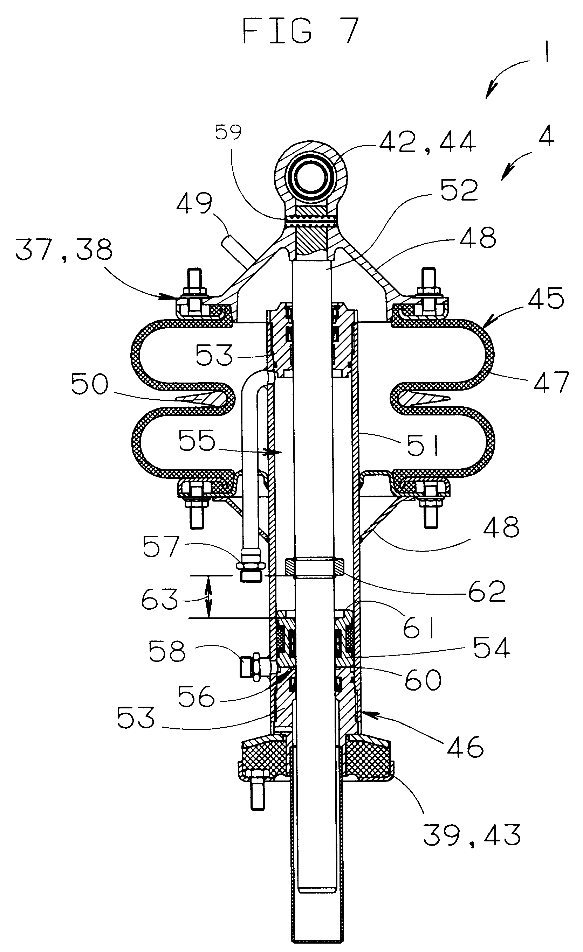

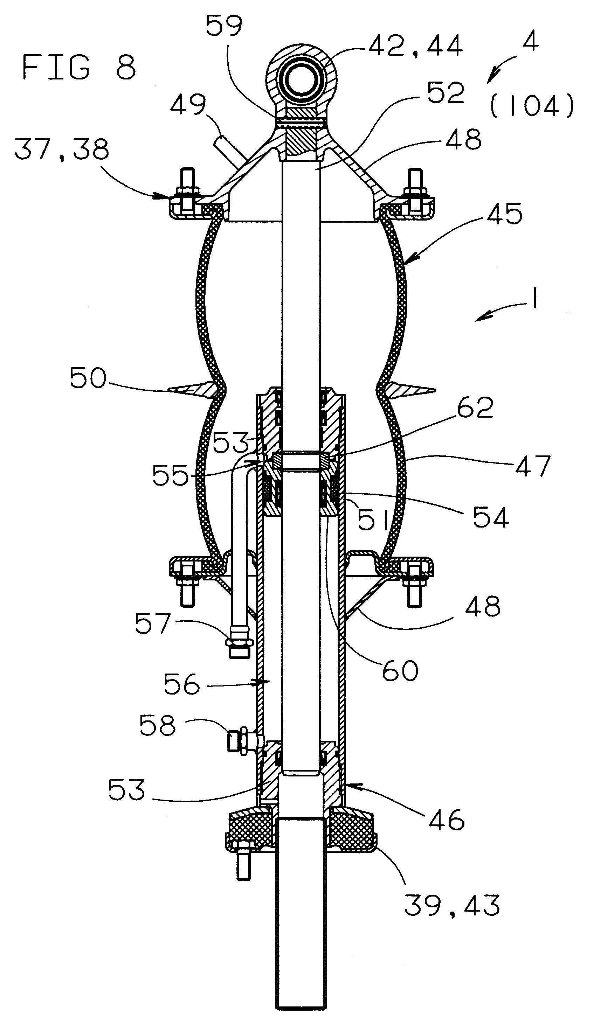

Sur les figures 7 et 8 apparaît, en détail, un tel organe de délestage et de levage (37, 38). Celui-ci comporte un ressort à gaz (45) servant à délester le mécanisme de récolte (15) et monté en parallèle avec un vérin de levage (46) permettant de lever ledit mécanisme de récolte (15) lorsque l'utilisateur le souhaite. Le ressort à gaz (45) comporte une enveloppe déformable (47) sous pression et deux flasques (48) liés chacun à une extrémité longitudinale correspondante de ladite enveloppe déformable (47). Le ressort à gaz (45) contient un gaz qui peut être amené à la pression désirée au travers d'une valve (49) implantée sur l'un des flasques (48). En gonflant plus ou moins l'enveloppe déformable (47) au travers de la valve (49), l'utilisateur a la possibilité d'adapter la rigidité du ressort à gaz (45) aux conditions de travail rencontrées.

Avantageusement, le ressort à gaz (45) contient de l'air, ce qui permet à l'utilisateur de gonfler aisément l'enveloppe déformable (47) au moyen d'une simple pompe à air. En outre, pour limiter la déformation latérale de l'enveloppe déformable (47) et la contraindre à une déformation longitudinale plus importante, l'enveloppe déformable (47) est entourée d'un organe rigidifiant (50).

Le vérin de levage (46), quant à lui, comporte notamment un cylindre (51) et une tige (52). La tige (52) est fixée au flasque supérieur (48) du ressort à gaz (45) au moyen d'une goupille (59), alors que le cylindre (51) est lié rigidement au flasque inférieur (48) dudit ressort à gaz (45). A chacune de ses extrémités, le cylindre (51) est muni d'une bague de guidage étanche (53) permettant à la tige (52) de déboucher de part et d'autre du cylindre (51). Au travail, lorsque le ressort à gaz (45) s'allonge et se raccourcit sous l'action du déplacement en hauteur du mécanisme de récolte (15), les deux flasques (48) du ressort à gaz (45) se rapprochent et s'éloignent l'un de l'autre pendant que la tige (52) coulisse dans le cylindre (51). Etant donné qu'aucun élément ne gêne le déplacement de la tige (52) dans le cylindre (51), le mécanisme de récolte (15) est donc parfaitement délesté au travail.

Pour lever le mécanisme de récolte (15) grâce au vérin de levage (46), il est prévu un piston (54) servant à allonger ledit vérin de levage (46). Le piston (54) est monté coulissant sur la tige (52) et sépare le cylindre (51) en deux chambres distinctes (55, 56) chacune alimentée au travers d'une conduite (57, 58) respective. Au travail, la chambre inférieure (56) du cylindre (51) est vide et la face inférieure (60) du piston (54) s'appuie, sous l'action du fluide contenu dans la chambre supérieure (55), contre la bague de guidage inférieure (53). Par ailleurs, la face supérieure (61) du piston (54) est destinée à s'appuyer contre un collet (62) implanté un peu plus haut sur la tige (52) du vérin de levage (46). Comme dit précédemment, le piston (54) ne gêne pas le fonctionnement du ressort à gaz (45) durant le travail, étant donné qu'il subsiste un jeu fonctionnel (63) entre la face supérieure (61) du piston (54) et le collet (62) de la tige (52). Mais, lorsque l'utilisateur désire lever le mécanisme de récolte (15), il alimente, depuis le tracteur (2), la chambre inférieure (56) du cylindre (51) ce qui a pour effet de translater le piston (54) vers le haut. Dès l'instant où le piston (54) arrive en contact avec le collet (62), la tige (52) se déplace vers le haut et le vérin de levage (46) et le ressort à gaz (45) s'allongent. Le piston (54) et la tige (52) se translatent jusqu'à ce que le piston (54) arrive en bout de course. Dans sa position levée, le mécanisme de récolte (15) s'étend au moins sensiblement parallèlement au-dessus du sol et l'action des ressorts à gaz (45) est annulée (figure 8).

L'entraînement du mécanisme de récolte (15) est réalisé à partir de la prise de force (non représentée) du tracteur (2), qui entraîne, par l'intermédiaire d'un arbre télescopique à joints universels (64), un limiteur de couple (65) monté sur l'arbre d'entrée (66) d'un dispositif de transmission de mouvement (67) (figure 3). Le dispositif de transmission (67) comporte un carter inférieur (68) solidaire de la structure d'attelage (3) et un carter supérieur (69) solidaire de la tête d'attelage (19). L'arbre d'entrée (66) du carter inférieur (68) du dispositif de transmission de mouvement (67) s'étend suivant la direction d'avancement (23, 79) du tracteur (2) et entraîne, par l'intermédiaire d'un premier couple de roues dentées coniques (70), un arbre intermédiaire (71) dont l'axe de rotation est confondu avec l'axe géométrique (7A) et qui entraîne, par l'intermédiaire d'un deuxième couple de roues dentées coniques (72), l'arbre de sortie (73) du carter supérieur (69). Ce dernier entraîne, par l'intermédiaire d'un autre arbre télescopique à joints universels (74) (figures 1, 4 et 5), l'arbre d'entrée (non représenté) du carter d'entrée (35) du mécanisme de récolte (15). Afin de réduire l'angle de fonctionnement des joints universels de cet arbre télescopique (74), l'arbre de sortie (73) du carter supérieur (69) s'étend, au travail normal, au moins sensiblement au même niveau que l'arbre d'entrée (non représenté) du carter d'entrée (35) du mécanisme de récolte (15). D'autres particularités et avantages de la structure d'attelage (3) seront encore décrites ultérieurement.

Le pivotement de l'organe de guidage (26) de la roue (14) peut, en vue du transport, être condamné au moyen d'un dispositif de verrouillage (75) (figure 1, 4 et 6). Le dispositif de verrouillage (75) comporte notamment un vérin de positionnement (76) fixé à la console (28) du quadrilatère déformable (25) et un levier (77) lié rigidement à l'organe de guidage (26) de la roue (14). Au travail, le vérin de positionnement (76) n'agit pas sur ledit levier (77) ce qui permet à la roue (14) de s'orienter automatiquement autour de l'axe géométrique (27A) en fonction de son déplacement. A l'opposé, en vue du transport, le vérin de positionnement (76) agit sur le levier (77) au moyen d'un organe d'orientation (78) de sorte à orienter la roue (14) suivant la direction de transport (79) et à maintenir ladite roue (14) dans sa position de transport (figure 4). A cet effet, le levier (77) présente deux butées (80) s'étendant de part et d'autre de l'axe géométrique (27A) et qui sont réalisées chacune sous forme d'un galet (81). Compte tenu du fait que chaque galet (81) est en sus monté pivotant autour d'un axe (82) dirigé au moins sensiblement verticalement, l'orientation et le verrouillage de la roue (14) s'effectue aisément.

La faucheuse (1) selon l'invention fonctionne de la manière suivante :

Au transport (figures 3, 4 et 8), le vérin de manoeuvre (8) autorise le pivotement du corps (4) autour de l'axe géométrique (7A), tandis que la roue (14) est orientée dans la direction de transport (79). Les deux vérins de levage (46), quant à eux, maintiennent le mécanisme de récolte (15) au moins sensiblement parallèlement au-dessus du sol. Comme le corps (4) de la faucheuse (1) s'étend au moins sensiblement dans la voie du tracteur (2), les manoeuvres au transport sont facilitées. De surcroît, il ne faut qu'une place réduite pour le remisage.

Pour amener le corps (4) de la faucheuse (1) de sa position de transport (104) dans sa position de travail (204), on autorise le pivotement de la roue (14) autour de l'axe géométrique (27A) au moyen du vérin de positionnement (76) et on pivote le corps (4) dans sa position de travail (204) sous l'action du vérin de manoeuvre (8). Vu que le corps (4) s'appuie sur le sol, tant dans sa position de transport (104) que dans sa position de travail (204) au moyen d'au moins une roue (14), le tracteur conserve une bonne stabilité. Par ailleurs, compte tenu du dispositif de transmission de mouvement (67) perfectionné, le mécanisme de récolte (15) est susceptible d'être entraîné dans toutes les positions dans lesquelles il peut être pivoté autour de l'axe géométrique (7A).

Au travail (figures 1, 2, 5, 6 et 7), le vérin de manoeuvre (8) condamne le pivotement du corps (4) autour de l'axe géométrique (7A), tandis que la roue (14) est susceptible de pivoter autour de l'axe géométrique (27A). L'action des vérins de levage (46), quant à elle, est supprimée de sorte à permettre au mécanisme de récolte (15) de s'adapter au relief du sol. En sus, vu que chaque extrémité longitudinale (18, 24) est délestée, le mécanisme de récolte (15) passe aisément par dessus les obstacles que peut présenter le relief du sol.

La structure d'attelage (3) de cette faucheuse (1) selon l'invention, présente encore les particularités et les avantages suivants.

La structure d'attelage (3) se compose principalement du carter inférieur (68) et d'un cadre trois points (90) destiné à être lié aux trois points d'attelage (5) du tracteur (2). Le cadre trois points (90) comporte, à sa partie inférieure, un support cintré (91) de forme tubulaire qui s'étend au moins sensiblement sous le carter inférieur (68) afin de supporter une partie du poids de ce dernier et du premier dispositif de liaison (16). Le carter inférieur (68) est lié rigidement au cadre trois points (90) au moyen de seulement deux boulons (92, 93) dirigés au moins sensiblement perpendiculairement à l'arbre d'entrée (66) et au moins sensiblement horizontalement. L'un (92) des boulons (92, 93) est implanté au moins sensiblement à la même hauteur que le point d'attelage supérieur du cadre trois points (90) et traverse l'extrémité supérieure du carter inférieur (68), alors que l'autre boulon (93) est implanté à l'arrière et au bas du carter inférieur (68) où il fixe ledit carter inférieur (68) à deux languettes (94) du support (91) situées respectivement de part et d'autre dudit carter inférieur (68). Grâce à un tel agencement, le carter inférieur (68) peut être fixé rapidement et solidement au cadre trois points (90).

Le montage du carter supérieur (69), c'est-à-dire de la tête d'attelage (19), sur le carter inférieur (68) est réalisé au moyen d'un premier palier (95) appartenant à l'articulation cylindrique (7) et situé à la partie inférieure du carter supérieur (69). Afin d'assurer un bon guidage du carter supérieur (69) par rapport à la structure d'attelage (3), l'articulation cylindrique (7) présente également un deuxième palier (96) implanté à la partie supérieure dudit carter supérieur (69). A cet effet, la structure d'attelage (3) comporte en sus un bras (97) comprenant le deuxième palier (96) et fixé à la partie supérieur du carter inférieur (68) au moyen de seulement deux vis (98).

Par ailleurs, le vérin de manoeuvre (8), la crémaillère (11) et le secteur denté (13) forment un ensemble d'éléments de manoeuvre (99) servant à pivoter le corps (4) par rapport à la structure d'attelage (3) autour de l'axe géométrique (7A). Ces éléments de manoeuvre (99) sont intégrés dans la structure d'attelage (3). En effet, le vérin de manoeuvre (8) et la crémaillère (11) traversent le carter inférieur (68), alors que le secteur denté (13) est fixé sous le carter supérieur (69) qui s'ajuste sur le carter inférieur (68) afin d'intégrer totalement toutes les parties mobiles (10, 11, 13) desdits éléments de manoeuvre (99). Comme toutes ces parties mobiles (10, 11, 13) sont hors d'atteinte durant le fonctionnement normal de la faucheuse (1), on ne risque pas de se blesser. En outre, un tel agencement protège également les éléments de manoeuvre (99), notamment contre la corosion. On peut encore remarquer que les deux cylindres (9) du vérin de manoeuvre (8) sont implantés respectivement de part et d'autre du carter inférieur (68) et s'étendent au moins sensiblement perpendiculairement à l'arbre d'entrée (66) dudit carter inférieur (68). Par ailleurs, l'organe de manoeuvre (8) est agencé entre le cadre trois points (90) et l'arbre intermédiaire (71) du dispositif de transmission de mouvement (67). Du reste, les éléments de manoeuvre (99) sont implantés entre l'arbre d'entrée (66) du carter inférieur (68) et l'arbre de sortie (73) du carter supérieur (69).

Sur la figure 3, on peut voir que le fond du carter inférieur (68) est rempli de lubrifiant, dont le niveau (100), au travail, est tel que les roues dentées coniques (70) dudit carter inférieur (68) baignent au moins partiellement dans ledit lubrifiant. Grâce à une circulation forcée du lubrifiant, les roues dentées coniques (72), la crémaillère (11), le secteur denté (13), les joints et au moins certains roulements sont également lubrifiés. L'arbre intermédiaire (71) du dispositif de transmission de mouvement (67) comporte, à cet effet, un conduit (101) qui est centré sur l'axe de rotation dudit arbre intermédiaire (71) et qui collabore, à son extrémité inférieure, avec une vis à gros pas (102) liée au carter inférieur (68) et baignant dans le lubrifiant. Ce faisant, la rotation de l'arbre intermédiaire (71) fait monter le lubrifiant du carter inférieur (68) dans le carter supérieur (69) afin de lubrifier le couple de roues dentées coniques (72) du carter supérieur (69). Ensuite, le lubrifiant s'écoule du carter supérieur (69) dans le carter inférieur (68) au travers d'ouvertures (103) prévues entre lesdits carters (68, 69).

On peut, en sus, remarquer que les deux roues dentées coniques (70, 72) de l'arbre intermédiaire (71) sont implantées respectivement à chaque extrémité longitudinale dudit arbre intermédiaire (71) et plus bas que l'autre roue dentée conique (70, 72) correspondante.

Du reste, on peut encore voir sur la figure 3 qu'entre la roue dentée conique (70) de l'arbre d'entrée (66) et l'arbre d'entrée (66) lui-même est implanté un dispositif à roue libre (105). Ainsi, lorsque l'on arrête l'entraînement de l'arbre d'entrée (66), le dispositif à roue libre (105) permet l'arrêt progressif de la rotation des organes de coupe (33) et du rotor de traitement (34).

Finalement, différentes modifications restent possibles, notamment en ce qui concerne la constitution des divers éléments ou par substitution d'équivalents techniques, sans pour autant sortir du domaine de protection défini par les revendications.

## Revendications

1. Machine agricole comportant une structure d'attelage (3) destinée à être liée à l'attelage à trois points (5) d'un véhicule moteur (2), et un corps (4) lié à ladite structure d'attelage (3) à l'aide d'une articulation cylindrique (7) d'axe géométrique (7A) dirigé vers le haut, de sorte à pouvoir occuper deux positions distinctes (104, 204) par pivotement autour dudit axe géométrique (7A), dont l'une (204) est une position de travail dans laquelle le corps (4) s'étend transversalement à la direction de travail (23), ledit corps (4) comportant au moins un organe de travail (33, 34) animé au moyen d'un dispositif de transmission de mouvement (67) à engrenages (70, 72) qui comprend :
- un premier carter (68) solidaire de la structure d'attelage (3) et comportant un arbre d'entrée (66),
et
- un deuxième carter (69) solidaire du corps (4), monté pivotant par rapport au premier carter (68) autour de l'axe géométrique (7A) de ladite articulation cylindrique (7) et comportant un arbre de sortie (73),
ledit corps (4) pourvu du deuxième carter (69) étant susceptible d'être pivoté par rapport à la structure d'attelage (3) pourvue du premier carter (68), de l'une au moins desdites positions (104, 204) dans l'autre position, ***caractérisée en ce*** que ledit pivotement du corps (4) pourvu du deuxième carter (69) par rapport à la structure d'attelage (3) pourvue du premier carter (68) est réalisé au moyen d'éléments de manoeuvre (99) agencés pour être commandés depuis le véhicule moteur (2) et comprenant :
- un premier élément de manoeuvre mobile (10, 11) porté par la structure d'attelage (3), et
- un deuxième élément de manoeuvre mobile (13) porté par le corps (4), ces éléments de manoeuvre mobiles (10, 11, 13) étant en liaison d'entraînement l'un avec l'autre et étant implantés à l'intérieur d'un ensemble (9, 68, 69) formé au moins par le premier carter (68) et le deuxième carter (69).

2. Machine agricole selon la revendication 1, ***caractérisée en ce*** que les éléments de manoeuvre (99) sont implantés plus haut que l'arbre d'entrée (66) du premier carter (68).

3. Machine agricole selon la revendication 1 ou 2, ***caractérisée en ce*** que les éléments de manoeuvre (99) sont implantés entre l'arbre d'entrée (66) du premier carter (68) et l'arbre de sortie (73) du deuxième carter (69).

4. Machine agricole selon l'une quelconque des revendications 1 à 3, ***caractérisée en ce*** :
- que le premier élément de manoeuvre mobile (10, 11) est constitué par le piston (10) d'un vérin de manoeuvre (8) et par une crémaillère (11) actionnée par ledit piston (10), et
- que le deuxième élément de manoeuvre mobile (13) est constitué par un secteur denté (13) centré sur l'axe géométrique (7A) de l'articulation cylindrique (7) et engrenant avec la crémaillère (11).

5. Machine agricole selon la revendication 4, ***caractérisée en ce*** que le vérin de manoeuvre (8) comporte deux cylindres (9) s'étendant dans le prolongement l'un de l'autre et fixés à la structure d'attelage (3), et deux pistons (10) montés chacun de manière coulissante dans le cylindre (9) correspondant et entre lesquels est implantée la crémaillère (11).

6. Machine agricole selon la revendication 4 ou 5, ***caractérisée en ce*** que le secteur denté (13) est lié au deuxième carter (69).

7. Machine agricole selon l'une quelconque des revendications 4 à 6, ***caractérisée en ce*** que le vérin de manoeuvre (8) est un vérin hydraulique.

8. Machine agricole selon l'une quelconque des revendications 1 à 7, ***caractérisée en ce** :*
- que le deuxième carter (69) est lié à la structure d'attelage (3) au moyen de deux paliers (95, 96) formant l'articulation cylindrique (7) et implantés respectivement à la partie supérieure et à la partie inférieure dudit deuxième carter (69),
et
- que la structure d'attelage (3) comporte au moins deux parties (68, 97) liées rigidement entre elles et comportant chacune l'un desdits paliers (95, 96).

9. Machine agricole selon la revendication 8, ***caractérisée en ce*** que l'une desdites parties (68, 97) est constituée par le premier carter (68).

10. Machine agricole selon la revendication 8 ou 9, ***caractérisée en ce*** que la structure d'attelage (3) comporte trois parties (90, 68, 97) :
- un cadre trois points (90) destiné à être lié aux trois points d'attelage (5) du véhicule moteur (2),
- le premier carter (68) comprenant l'un desdits paliers (95) et étant lié rigidement au cadre trois points (90),
et
- un bras (97) comportant l'autre palier (96) et fixé au premier carter (68) ou au cadre trois points (90).

11. Machine agricole selon la revendication 10, ***caractérisée en ce** :*
- que le cadre trois points (90) comporte à sa partie inférieure un support (91) qui s'étend au moins sensiblement sous le premier carter (68) et auquel est fixé ledit premier carter (68) au moyen d'un organe de fixation (93),
- que le premier carter (68) est également fixé à la partie supérieure du cadre trois points (90) au moyen d'un autre organe de fixation (92),
- que le deuxième carter (69) est implanté au-dessus du premier carter (68),
et
- que le bras (97) est fixé au premier carter (68) au moyen d'éléments de fixation (98).

12. Machine agricole selon la revendication 11, ***caractérisée en ce*** que les organes de fixation (92, 93) et les éléments de fixation (98) comportent des vis.

13. Machine agricole selon l'une quelconque des revendications 1 à 12, ***caractérisée en ce*** que l'autre position (104) du corps (4) est une position de transport dans laquelle le corps (4) s'étend au moins sensiblement suivant la direction de transport (79).

14. Machine agricole selon l'une quelconque des revendications 1 à 13, ***caractérisée en ce*** que dans les deux positions (104, 204) du corps (4), ainsi que durant le pivotement du corps (4) par rapport à la structure d'attelage (3) autour de l'axe géométrique (7A) de l'articulation cylindrique (7), le corps (4) s'appuie continuellement sur le sol au moyen d'une roue (14).

15. Machine agricole selon l'une quelconque des revendications 1 à 14, ***caractérisée en ce*** que dans le voisinage de l'articulation cylindrique (7), le corps (4) comporte une liaison pivot (21) d'axe géométrique (21A) au moins sensiblement perpendiculaire au corps (4) et à l'axe géométrique (7A) de ladite articulation cylindrique (7), et qu'un arbre télescopique à joints universels (74) transmet le mouvement de rotation de l'arbre de sortie (73) du deuxième carter (69) à un arbre d'entrée d'un carter d'entrée (35) lié au reste du corps (4).

16. Machine agricole selon l'une quelconque des revendications 1 à 15, ***caractérisée en ce*** que les engrenages (70, 72) du dispositif de transmission de mouvement (67) sont lubrifiés à l'aide d'une circulation forcée de lubrifiant de l'un des carters (68, 69) dans l'autre.

17. Machine agricole selon la revendication 16, ***caractérisée en ce*** que l'un desdits carters (68, 69) est un carter supérieur (69) et l'autre un carter inférieur (68), et que, durant le travail, le lubrifiant est amené du carter inférieur (68) dans le carter supérieur (69) au travers d'un conduit (101), tandis qu'une ouverture (103) prévue entre lesdits carters (68, 69) permet au lubrifiant de s'écouler du carter supérieur (69) dans le carter inférieur (68).

18. Machine agricole selon l'une quelconque des revendications 1 à 17, ***caractérisée en ce*** que l'arbre d'entrée (66) du premier carter (68) du dispositif de transmission de mouvement (67) entraîne, par l'intermédiaire d'un premier couple de roues dentées coniques (70), un arbre intermédiaire (71) dont l'axe de rotation est au moins sensiblement confondu avec l'axe géométrique (7A) de l'articulation cylindrique (7) et qui entraîne, par l'intermédiaire d'un deuxième couple de roues dentées coniques (72), l'arbre de sortie (73) du deuxième carter (69).

19. Machine agricole selon les revendications 17 et 18, ***caractérisée en ce*** que l'arbre intermédiaire (71) comporte le conduit (101) par l'intermédiaire duquel le lubrifiant est amené dans le carter supérieur (69) sous l'effet de la rotation dudit arbre intermédiaire (71).

20. Machine agricole selon la revendication 19, ***caractérisée en ce*** que le conduit (101) est centré sur l'axe de rotation de l'arbre intermédiaire (71) et est muni, au moins sensiblement à son extrémité inférieure, d'une forme hélicoïdale baignant dans le lubrifiant, respectivement collabore, au moins sensiblement à son extrémité inférieure, avec une forme hélicoïdale (102) baignant dans le lubrifiant.

21. Machine agricole selon la revendication 20, ***caracterisée en ce*** que la forme hélicoïdale (102) est réalisée par une vis à gros pas fixée au carter inférieur (68).

22. Machine agricole selon l'une quelconque des revendications 1 à 21, ***caractérisée en ce*** que le dispositif de transmission de mouvement (67) comporte un dispositif à roue libre (105).

23. Machine agricole selon l'une quelconque des revendications 18 à 21 combinée avec la revendication 22, ***caractérisée en ce*** que le dispositif à roue libre (105) est directement implanté entre la roue dentée conique (70) de l'arbre d'entrée (66) et l'arbre d'entrée (66) lui-même.

24. Machine agricole selon l'une quelconque des revendications 1 à 23, ***caractérisée en ce*** que c'est une machine de coupe.

25. Machine agricole selon la revendication 24, ***caractérisée en ce*** que c'est une faucheuse avec ou sans organes de traitement (34) du produit coupé.

## Claims

1. Agricultural implement having a hitch structure (3) intended to be connected to the three-point hitch (5) of a motor vehicle (2), and a body (4) connected to the said hitch structure (3) by means of a cylindrical articulation (7) with upwardly pointing geometric axis (7A), so that it can occupy two distinct positions (104, 204) by pivoting about the said geometric axis (7A), one (204) of which positions is a work position in which the body (4) extends transversely to the direction of work (23), the said body (4) having at least one working member (33, 34) driven by means of a movement-transmission device (67) with gears (70, 72) and which comprises:
- a first casing (68) secured to the hitch structure (3) and having an input shaft (66),
and
- a second casing (69) secured to the body (4), mounted so that it can pivot with respect to the first casing (68) about the geometric axis (7A) of the said cylindrical articulation (7) and having an output shaft (73),
the said body (4) provided with the second casing (69) being able to be pivoted with respect to the hitch structure (3) provided with the first casing (68), from at least one of the said positions (104, 204) into the other position, ***characterized in*** that the said pivoting of the body (4) provided with the second casing (69) with respect to the hitch structure (3) provided with the first casing (68) is achieved by means of operating elements (99) designed to be controlled from the motor vehicle (2) and comprising:
- a first mobile operating element (10, 11) borne by the hitch structure (3),
and
- a second mobile operating element (13) borne by the body (4),
these mobile operating elements (10, 11, 13) having a driving connection with one another and being fitted inside an assembly (9, 68, 69) formed at least by the first casing (68) and the second casing (69).

2. Agricultural implement according to Claim 1, ***characterized in*** that the operating elements (99) are situated higher up than the input shaft (66) of the first casing (68).

3. Agricultural implement according to Claim 1 or 2, ***characterized in*** that the operating elements (99) are situated between the input shaft (66) of the first casing (68) and the output shaft (73) of the second casing (69).

4. Agricultural implement according to any one of Claims 1 to 3, ***characterized in***:
- that the first mobile operating element (10, 11) consists of the piston (10) of an operating ram (8) and of a rack (11) actuated by the said piston (10), and
- that the second mobile operating element (13) consists of a toothed sector (13) centred on the geometric axis (7A) of the cylindrical articulation (7) and meshing with the rack (11).

5. Agricultural implement according to Claim 4, ***characterized in*** that the operating ram (8) has two cylinders (9) extending one in line with the other and fixed to the hitch structure (3), and two pistons (10) each one mounted so that it can slide in the corresponding cylinder (9) and between which the rack (11) is fitted.

6. Agricultural implement according to Claim 4 or 5, ***characterized in*** that the toothed sector (13) is connected to the second casing (69).

7. Agricultural implement according to any one of Claims 4 to 6, ***characterized in*** that the operating ram (8) is a hydraulic ram.

8. Agricultural implement according to any one of Claims 1 to 7, ***characterized in***:
- that the second casing (69) is connected to the hitch structure (3) by means of two bearings (95, 96) forming the cylindrical articulation (7) and situated respectively at the upper part and at the lower part of the said second casing (69),
and
- that the hitch structure (3) comprises at least two parts (68, 97) connected together rigidly and each comprising one of the said bearings (95, 96).

9. Agricultural implement according to Claim 8, ***characterized in*** that one of the said parts (68, 97) consists of the first casing (68).

10. Agricultural implement according to Claim 8 or 9, ***characterized in*** that the hitch structure (3) comprises three parts (90, 68, 97):
- a three-point frame (90) intended to be connected to the three hitch points (5) of the motor vehicle (2),
- the first casing (68) comprising one of the said bearings (95) and being connected rigidly to the three-point flame (90),
and
- an arm (97) comprising the other bearing (96) and being fixed to the first casing (68) or to the three-point flame (90).

11. Agricultural implement according to Claim 10, ***characterized in***:
- that the three-point frame (90) has at its lower part a support (91) which extends at least approximately under the first casing (68) and to which the said first casing (68) is fixed by means of a fixing member (93),
- that the first casing (68) is also fixed to the upper part of the three-point frame (90) by means of another fixing member (92),
- that the second casing (69) is situated above the first casing (68),
and
- that the arm (97) is fixed to the first casing (68) by means of fixing elements (98).

12. Agricultural implement according to Claim 11, ***characterized in*** that the fixing members (92, 93) and the fixing elements (98) include screws.

13. Agricultural implement according to any one of Claims 1 to 12, ***characterized in*** that the other position (104) of the body (4) is a transport position in which the body (4) extends at least approximately in the direction of transport (79).

14. Agricultural implement according to any one of Claims 1 to 13, ***characterized in*** that in both positions (104, 204) of the body (4) as well as during pivoting of the body (4) with respect to the hitch structure (3) about the geometric axis (7A) of the cylindrical articulation (7), the body (4) continuously rests on the ground by means of a wheel (14).

15. Agricultural implement according to any one of Claims 1 to 14, ***characterized in*** that close to the cylindrical articulation (7) the body (4) has a pivot connection (21) of geometric axis (21A) at least approximately perpendicular to the body (4) and to the geometric axis (7A) of the said cylindrical articulation (7), and that a telescopic shaft (74) with universal-joints transmits the rotational movement of the output shaft (73) of the second casing (69) to an input shaft of an input casing (35) connected to the rest of the body (4).

16. Agricultural implement according to any one of Claims 1 to 15, ***characterized in*** that the gears (70, 72) of the movement-transmission device (67) are lubricated by means of forced circulation of lubricant from one of the casings (68, 69) into the other.

17. Agricultural implement according to Claim 16, ***characterized in*** that one of the said casings (68, 69) is an upper casing (69) and the other a lower casing (68) and that during work, the lubricant is conveyed from the lower casing (68) to the upper casing (69) through a duct (101), while an opening (103) provided between the said casings (68, 69) allows the lubricant to run down from the upper casing (69) into the lower casing (68).

18. Agricultural implement according to any one of Claims 1 to 17, ***characterized in*** that the input shaft (66) of the first casing (68) of the movement-transmission device (67) drives, via a first pair of bevel gears (70), an intermediate shaft (71), the axis of rotation of which is at least approximately coincident with the geometric axis (7A) of the cylindrical articulation (7) and which, via a second pair of bevel gears (72), drives the output shaft (73) of the second casing (69).

19. Agricultural implement according to Claims 17 and 18, ***characterized in*** that the intermediate shaft (71) comprises the duct (101) via which the lubricant is conveyed into the upper casing (69) under the effect of the rotation of the said intermediate shaft (71).

20. Agricultural implement according to Claim 19, ***characterized in*** that the duct (101) is centred on the axis of rotation of the intermediate shaft (71) and, at least approximately at its lower end, has a helical shape immersed in the lubricant and respectively collaborates, at least approximately at its lower end, with a helical shape (102) immersed in the lubricant.

21. Agricultural implement according to Claim 20, ***characterized in*** that the helical shape (102) is achieved by a coarse-pitch screw fixed to the lower casing (68).

22. Agricultural implement according to any one of Claims 1 to 21, ***characterized in*** that the movement-transmission device (67) includes a free-wheel device (105).

23. Agricultural implement according to any one of Claims 18 to 21, combined with Claim 22, ***characterized in*** that the free-wheel device (105) is fitted directly between the bevel gear (70) of the input shaft (66) and the input shaft (66) itself.

24. Agricultural implement according to any one of Claims 1 to 23, ***characterized in*** that this is a cutting implement.

25. Agricultural implement according to Claim 24, ***characterized in*** that this is a mower with or without members (34) for treating the cut product.

## Patentansprüche

1. Landwirtschaftliche Maschine, die eine Kupplungsvorrichtung (3) zur Verbindung mit der Dreipunktkupplung (5) eines Motorfahrzeugs (2) und einen Körper (4) aufweist, der mit Hilfe eines zylindrischen Gelenks (7) mit einer nach oben gerichteten geometrischen Achse (7A) derart mit der Kupplungsvorrichtung (3) verbunden ist, daß er durch Schwenken um die geometrische Achse (7A) zwei verschiedene Positionen (104, 204) einnehmen kann, von denen eine (204) eine Arbeitsposition ist, in der sich der Körper (4) quer zur Arbeitsrichtung (23) erstreckt, wobei der Körper (4) mindestens ein Arbeitselement (33, 34) aufweist, das mittels einer Zahnräder (70, 72) enthaltenden Bewegungsübertragungsvorrichtung (67) in Gang gesetzt wird, die
- einen fest mit der Kupplungsvorrichtung (3) verbundenen ersten Getriebekasten (68), der eine Eingangswelle (66) aufweist,
und
- einen fest mit dem Körper (4) verbundenen zweiten Getriebekasten (69), der bezüglich des ersten Getriebekastens (68) um die geometrische Achse (7A) des zylindrischen Gelenks (7) schwenkbar angebracht ist und eine Ausgangswelle (73) aufweist,
enthält, wobei der mit dem zweiten Getriebekasten (69) versehene Körper (4) bezüglich der mit dem ersten Getriebekasten (68) versehenen Kupplungsvorrichtung (3) aus mindestens einer der Positionen (104, 204) in die andere Position schwenken kann, ***dadurch gekennzeichnet,*** daß das Schwenken des mit dem zweiten Getriebekasten (69) versehenen Körpers (4) bezüglich der mit dem ersten Getriebekasten (68) versehenen Kupplungsvorrichtung (3) mittels Betätigungselementen (99) erfolgt, die so angeordnet sind, daß sie von dem Motorfahrzeug (2) aus betätigt werden können, und
- ein von der Kupplungsvorrichtung (3) getragenes erstes bewegliches Betätigungselement (10, 11) und
- ein von dem Körper (4) getragenes zweites bewegliches Betätigungselement (13)
umfassen, wobei diese bewegliche Betätigungselemente (10, 11, 13) miteinander in Antriebsverbindung stehen und im Innern einer Einheit (9, 68, 69) angebracht sind, die mindestens von dem ersten Getriebekasten (68) und dem zweiten Getriebekasten (69) gebildet wird.

2. Landwirtschaftliche Maschine nach Anspruch 1, ***dadurch gekennzeichnet,*** daß die Betätigungselemente (99) höher als die Eingangswelle (66) des ersten Getriebekastens (68) angebracht sind.

3. Landwirtschaftliche Maschine nach Anspruch 1 oder 2, ***dadurch gekennzeichnet,*** daß die Betätigungselemente (99) zwischen der Eingangswelle (66) des ersten Getriebekastens (68) und der Ausgangswelle (73) des zweiten Getriebekastens (69) angebracht sind.

4. Landwirtschaftliche Maschine nach irgend einem der Ansprüche 1 bis 3, ***dadurch gekennzeichnet,*** daß
- das erste bewegliche Betätigungselement (10, 11) durch den Kolben (10) eines Betätigungszylinders (8) und durch eine durch den Kolben (10) betätigte Zahnstange (11) gebildet wird, und
- das zweite bewegliche Betätigungselement (13) durch ein auf der geometrischen Achse (7A) des zylindrischen Gelenks zentriertes Zahnsegment (13) gebildet wird, das mit der Zahnstange (11) in Eingriff steht.

5. Landwirtschaftliche Maschine nach Anspruch 4, ***dadurch gekennzeichnet,*** daß der Betätigungszylinder (8) zwei Zylinder (9), die sich in ihrer gegenseitigen Verlängerung erstrecken und an der Kupplungsvorrichtung (3) befestigt sind, und zwei Kolben (10), die jeweils gleitend in dem dazugehörigen Zylinder (9) angebracht sind und zwischen denen die Zahnstange (11) angeordnet ist, umfaßt.

6. Landwirtschaftliche Maschine nach Anspruch 4 oder 5, ***dadurch gekennzeichnet,*** daß das Zahnsegment (13) mit dem zweiten Getriebekasten (69) verbunden ist.

7. Landwirtschaftliche Maschine nach irgend einem der Ansprüche 4 bis 6, ***dadurch gekennzeichnet,*** daß es sich bei dem Betätigungszylinder (8) um einen Hydraulikzylinder handelt.

8. Landwirtschaftliche Maschine nach irgend einem der Ansprüche 1 bis 7, ***dadurch gekennzeichnet,*** daß
- der zweite Getriebekasten (69) mittels zweier Lager (95, 96) mit der Kupplungsvorrichtung (3) verbunden ist, welche das zylindrische Gelenk (7) bilden und jeweils am oberen Teil und am unteren Teil des zweiten Getriebekastens (69) angebracht sind,
und
- die Kupplungsvorrichtung (3) mindestens zwei Teile (68, 97) aufweist, die starr miteinander verbunden sind und jeweils eines der Lager (95, 96) aufweisen.

9. Landwirtschaftliche Maschine nach Anspruch 8, ***dadurch gekennzeichnet,*** daß eines der Teile (68, 97) durch den ersten Getriebekasten (68) gebildet wird.

10. Landwirtschaftliche Maschine nach Anspruch 8 oder 9, ***dadurch gekennzeichnet,*** daß die Kupplungsvorrichtung (3) drei Teile (90, 68, 97) umfaßt:
- einen Dreipunktrahmen (90) zur Verbindung mit den drei Kupplungspunkten (5) des Motorfahrzeugs (2),
- den ersten Getriebekasten (68), der eines der Lager (95) aufweist und starr mit dem Dreipunktrahmen (90) verbunden ist, und
- einen Arm (97), der das andere Lager (96) aufweist und an dem ersten Getriebekasten (68) oder dem Dreipunktrahmen (90) befestigt ist.

11. Landwirtschaftliche Maschine nach Anspruch 10, ***dadurch gekennzeichnet,*** daß
- der Dreipunktrahmen (90) an seinem unteren Teil eine Stütze (91) aufweist, die sich zumindest im wesentlichen unter dem ersten Getriebekasten (68) erstreckt und an der der erste Getriebekasten (68) mittels eines Befestigungsglieds (93) befestigt ist,
- der erste Getriebekasten (68) mittels eines anderen Befestigungsglieds (92) ebenfalls an dem oberen Teil des Dreipunktrahmens (90) befestigt ist,
- der zweite Getriebekasten (69) über dem ersten Getriebekasten (68) angeordnet ist
und
- der Arm (97) mittels Befestigungselementen (98) an dem ersten Getriebekasten (68) befestigt ist.

12. Landwirtschaftliche Maschine nach Anspruch 11, ***dadurch gekennzeichnet,*** daß die Befestigungsglieder (92, 93) und die Befestigungselemente (98) Schrauben umfassen.

13. Landwirtschaftliche Maschine nach irgend einem der Ansprüche 1 bis 12, ***dadurch gekennzeichnet,*** daß es sich bei der anderen Position (104) des Körpers (4) um eine Transportposition handelt, in der sich der Körper (4) zumindest im wesentlichen in Transportrichtung (79) erstreckt.

14. Landwirtschaftliche Maschine nach irgend einem der Ansprüche 1 bis 13, ***dadurch gekennzeichnet,*** daß sich der Körper (4) in den beiden Positionen (104, 204) sowie während des Schwenkens des Körpers (4) bezüglich der Kupplungsvorrichtung (3) um die geometrische Achse (7A) des zylindrischen Gelenks (7) mittels eines Rads (14) fortwährend auf den Boden stützt.

15. Landwirtschaftliche Maschine nach irgend einem der Ansprüche 1 bis 14, ***dadurch gekennzeichnet,*** daß der Körper (4) in der Nähe des zylindrischen Gelenks (7) eine Zapfenverbindung (21) aufweist, deren geometrische Achse (21A) zumindest im wesentlichen senkrecht zum Körper (4) und zur geometrischen Achse (7A) des zylindrischen Gelenks (7) verläuft, und daß eine Teleskopwelle (74) mit Kardangelenken die Drehbewegung der Ausgangswelle (73) des zweiten Getriebekastens (69) auf eine Eingangswelle eines mit dem Rest des Körpers (4) verbundenen Eingangsgetriebekastens (35) überträgt.

16. Landwirtschaftliche Maschine nach irgend einem der Ansprüche 1 bis 15, ***dadurch gekennzeichnet,*** daß die Zahnräder (70, 72) der Bewegungsübertragungsvorrichtung (67) mit Hilfe eines Zwangsumlaufs von Schmiermittel von einem der Getriebekästen (68, 69) in den anderen geschmiert werden.

17. Landwirtschaftliche Maschine nach Anspruch 16, ***dadurch gekennzeichnet,*** daß einer der Getriebekästen (68, 69) ein oberer Getriebekasten (69) und der andere ein unterer Getriebekasten (68) ist und daß das Schmiermittel im Betrieb von dem unteren Getriebekasten (68) über eine Leitung (101) in den oberen Getriebekasten (69) geführt wird, während eine zwischen den Getriebekästen (68, 69) vorgesehene Öffnung (103) ein Fließen des Schmiermittels von dem oberen Getriebekasten (69) in den unteren Getriebekasten (68) gestattet.

18. Landwirtschaftliche Maschine nach irgend einem der Ansprüche 1 bis 17, ***dadurch gekennzeichnet,*** daß die Eingangswelle (66) des ersten Getriebekastens (68) der Bewegungsübertragungsvorrichtung (67) mittels eines ersten Paares von Kegelrädern (70) eine Zwischenwelle (71) antreibt, deren Drehachse zumindest im wesentlichen mit der geometrischen Achse (7A) des zylindrischen Gelenks (7) zusammenfällt und die mittels eines zweiten Paares von Kegelrädern (72) die Ausgangswelle (73) des zweiten Getriebekastens (69) antreibt.

19. Landwirtschaftliche Maschine nach Ansprüche 17 und 18, ***dadurch gekennzeichnet,*** daß die Zwischenwelle (71) die Leitung (101) enthält, mittels derer das Schmiermittel unter der Drehwirkung der Zwischenwelle (71) in den oberen Getriebekasten (69) geführt wird.

20. Landwirtschaftliche Maschine nach Anspruch 19, ***dadurch gekennzeichnet,*** daß die Leitung (101) auf der Drehachse der Zwischenwelle (71) zentriert und zumindest im wesentlichen an ihrem unteren Ende mit einer in das Schmiermittel getauchten Schraubenform versehen ist bzw. zumindest im wesentlichen an ihrem unteren Ende mit einer in das Schmiermittel getauchten Schraubenform (102) zusammenwirkt.

21. Landwirtschaftliche Maschine nach Anspruch 20, ***dadurch gekennzeichnet,*** daß die Schraubenform (102) durch eine an dem unteren Getriebekasten (68) befestigte Schraube mit großer Steigung gebildet wird.

22. Landwirtschaftliche Maschine nach irgend einem der Ansprüche 1 bis 21, ***dadurch gekennzeichnet,*** daß die Bewegungsübertragungsvorrichtung (67) eine Freilaufvorrichtung (105) aufweist.

23. Landwirtschaftliche Maschine nach irgend einem der Ansprüche 18 bis 21 in Kombination mit Anspruch 22, ***dadurch gekennzeichnet,*** daß die Freilaufvorrichtung (105) direkt zwischen dem Kegelrad (70) der Eingangswelle (66) und der Eingangswelle (66) selbst angebracht ist.

24. Landwirtschaftliche Maschine nach irgend einem der Ansprüche 1 bis 23, ***dadurch gekennzeichnet,*** daß es sich um eine Schneidmaschine handelt.

25. Landwirtschaftliche Maschine nach Anspruch 24, ***dadurch gekennzeichnet,*** daß es sich um eine Mähmaschine mit oder ohne Elemente (34) zur Behandlung des Schnittgutes handelt.
